# EUROPEAN PATENT SPECIFICATION

(11) **EP 0 709 345 B1**
(45) Date of publication and mention of the grant of the patent: **12.08.1998**
(21) Application number: 95307573.6
(22) Date of filing: 24.10.1995
(51) Int. Cl.: C03C 3/247, C03C 4/12

(54) **Tb- or Eu-containing fluorophosphate fluorescent glass**
Tb- oder Eu-enthaltendes Fluorophosphat fluoreszierendes Glas
Verre fluorescent de fluorophosphate contenant Tb ou Eu

(30) Priority: 31.10.1994 JP 266759/94
(43) Date of publication of application: 01.05.1996
(73) Proprietor: SUMITA OPTICAL GLASS, INC., Urawa-shi, Saitama-ken (JP)
(72) Inventor: Otsuka, Masaaki, c/o Sumita Optical Glass Inc., Urawa-shi, Saitama-ken (JP)
(74) Representative: Baverstock, Michael George Douglas

(56) References cited:
- WO-A-87/02656
- FR-A- 2 381 724
- US-A- 4 415 464
- DATABASE INSPEC INSTITUTE OF ELECTRICAL ENGINEERS, STEVENAGE, GB Inspec No. 3536356, QI CHANGHONG ET AL 'Spectroscopic properties of Tb/sup 3+/ ions in fluorophosphate glass and possibility of obtaining visible laser light at room temperature'
- SOVIET JOURNAL OF GLASS PHYSICS AND CHEMISTRY, vol. 11, no. 6, December 1985 NEW YORK US, pages 409-415, T. V. BOCHAROVA ET AL. 'Correlation between the optical and ESR spectra of gamma-irradiated phosphate glasses '
- JOURNAL OF NON-CRYSTALLINE SOLIDS, vol. 142, no. 1-2, 1992 AMSTERDAM NL, pages 148-154, S. TANABE ET AL. 'Local structure of rare-earth ions in fluorophosphate glasses by phonon sideband and Mössbauer spectroscopy'
- SOVIET JOURNAL OF GLASS PHYSICS AND CHEMISTRY, vol. 3, no. 3, June 1977 NEW YORK US, pages 233-238, V. B. KOLOBKOV ET AL. 'A spectral luminescence study of rare-earth activated fluophosphate glasses'

## Description

This invention relates to a Tb- or Eu-containing fluorophosphate fluorescent glass capable of converting invisible ultraviolet rays into visible rays with high efficiency and available for controlling the optical axis of a laser beam such as excimer laser .

Phosphors using rare earth elements have been used widely up to the present time, mainly as phosphors for, for example, lamps and color picture. Of late, materials for the anti-Stokes-wise wave length conversion of infrared light into visible light have been studied extensively, for example, with a view to application to laser materials.

Tb ion, which shows the strongest fluorescence (green) in the visible region, among the rare earth element ions, has been put to practical use as intensifying screens, projection cathode-ray tubes, high color rendering fluorescent lamps, etc. Eu ion showing a fluorescence with a narrow spectrum width in the red region has been put into practice as color picture tubes, high color rendering fluorescent lamps, etc. As described above, a phosphor using Tb or Eu has already been put to practical use, but such a phosphor is an opaque material which is obtained by coating a suitable carrier with a powdered phosphor to thus give only a superficial emission.

As such a glass utilizing the fluorescence of Tb or Eu, there are used those described in Japanese Patent Publications Nos. 27047/1982 and 27048/1982.

However, the glasses described in these publications, for example, in Japanese Patent Publication No. 27047/1982 contain only at most 1.5 mol % of Eu₂O₃ as a fluorescent agent. In the case of Japanese Patent Publication No. 27048/1982, only at most 1.5 mol % of Tb₂O₃ is included as a fluorescent agent and other rare earth elements such as Eu₂O₃, Dy₂O₃, Sm₂O₃ and Tm₂O₃, are simultaneously added for imparting a multi-coloring property.

When varieties of fluorescent agents are present in admixture, in general the fluorescent intensity is decreased by their interaction and a high efficiency emission cannot be obtained.

Chinese Journal of Lasers, Vol. 16, No. 4, 1989, pages 227-232, describes terbium-containing fluorophosphate laser glasses.

FR-A-2 381 724 aims to provide a stable laser glass with a small non-linear refractive index coefficient comprising a fluorophosphate glass matrix with a small amount of rare earth phosphor. The glasses do not contain terbium and none of the examples contain europium.

Soviet Journal of Glass Physics & Chemistry, Vol 11, No. 6, 1985 at pages 409-415; Journal of Non-Cyrstalline Solids, Vol. 142, No. 1-2, 1992, at pages 148 to 154; and Soviet Journal of Glass Physics and Chemistry, Vol. 3, No. 3, 1977, at pages 233-238 all describe fluorophosphate glasses containing europium.

US-A-4 415 464 describes Faraday rotation glasses containing terbium.

WO-A-8702656 describes host glasses similar in composition to the glasses of the present invention but without terbium or europium.

It is an object of the present invention to provide a Tb- or Eu-containing fluorophosphate fluorescent glass whereby the above described problems of the prior art can be overcome.

It is another object of the present invention to provide a Tb- or Eu-containing fluorophosphate fluorescent glass in which a large quantity of Tb or Eu can be incorporated, concentration quenching scarcely occurs and a strong fluorescence is exhibited in the visible region by irradiation of ultraviolet rays such as in an excimer laser.

These objects can be attained by a Tb- or Eu-containing fluorophosphate fluorescent glass capable of exhibiting fluorescence in the visible region, having a chemical composition comprising, at least, phosphorus (P), oxygen (O) and fluorine (F), and further containing Tb or Eu as a fluorescent agent.

The accompanying drawings illustrate the principle and merits of the present invention.
Fig. 1 is a graph showing a fluorescent spectrum of Tb ion when the glass prepared in Example 1 is excited by an ultraviolet ray of 250 nm.
Fig. 2 is a graph showing a fluorescent spectrum of Eu ion when the glass prepared in Example 19 is excited by an ultraviolet ray of 250 nm.

Generally, the fluorescence of rare earth ions tends to be subject to concentration quenching and the basic absorption of a glass matrix at the short wavelength side is shifted to the long wavelength side with the increase of amounts of rare earth elements. Accordingly, capture of excited energy takes place by the non-luminescence center, so that a phosphor material presenting a strong fluorescence cannot be obtained. This problem can be solved by the present invention.

Specifically, according to the present invention, there is provided a Tb- or Eu- containing fluorophosphate fluorescent glass capable of presenting fluorescence in the visible region, having a chemical composition comprising, at least phosphorus (P), oxygen (0) and fluorine (F), and further containing Tb or Eu as a fluorescent agent. Specifically, the Tb- or Eu-containing fluorophosphate fluorescent glass is represented, in terms of atoms for making up the glass, by the following chemical composition (mol %):
- P: 2 to 13 %
- Al: 2 to 12 %
- Mg: O to 6 %
- Ca: 0 to 9 %
- Sr: 1.5 to 12 %
- Ba: 1.5 to 17 %
- Zn: 0 to 2 %
- Ln: 0.8 to 5 %
- Ln¹: 0 to 4 %
- R: 0 to 3 %
- Ce: 0 to 0.2 %
- 0: 4 to 55 % and
- F: 15 to 70 %
and Ln is Tb or Eu, and Ln¹ is at least one atom selected from the group consisting of Y, La, Gd and Yb and R is at least one atom selected from the group consisting of Li, Na and K.

The reasons for limiting the composition range of each component of this fluorophosphate fluorescent glass to that described above are as follows:
P is a glass-forming component.
Al is a component for increasing the viscosity of the glass and suppressing crystallization.
Mg, Ca, Sr, Ba and Zn are components for improving the melting property of the glass.
R (at least one atom selected from Li, Na and K) acts to lower the melting temperature of a glass melt.
Ln (Tb or Eu) is an important component capable of presenting fluorescence in the visible region by ultraviolet excitation.
Ln¹ (at least one atom selected from Y, La, Gd and Yb) is a component for increasing the viscosity of the glass and suppressing crystallization.
Ce is a component acting as a sensitizer of the fluorescent agent.

Production of the Tb- or Eu- containing fluorophosphate fluorescent glass according to the present invention is carried out by mixing the corresponding raw material compounds in a proportion of the desired composition, for example, aluminum phosphate, strontium fluoride, barium fluoride and terbium oxide, melting the resulting mixture in the air at a temperature of 900 to 1300° for 2 to 3 hours and allowing the mixture to flow out into a metallic mold, followed by shaping.

### Examples

The present invention will now be illustrated in greater detail by the following examples, but the present invention and the merits thereof are not intended to be limited by the materials, compositions and production procedures described in these examples.

### (Example 1)

Using the compounds shown in Table 1 as raw materials, the raw materials were mixed in a proportion by weight as in Sample No. 1, melted at 900 to 1300 °C, allowed to flow into a metallic mold and shaped to obtain a glass in stable manner.

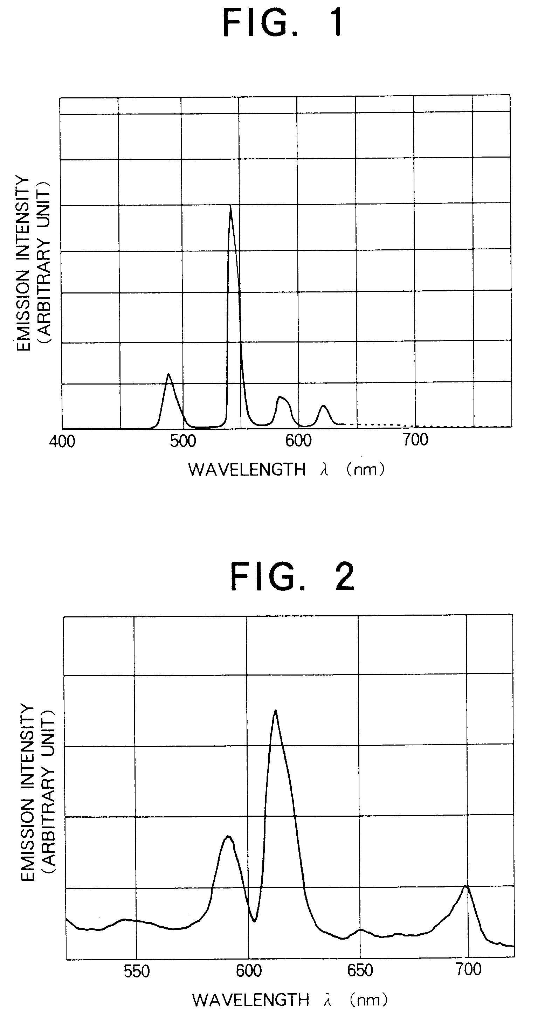

The thus prepared glass was excited by an ultraviolet ray of 250 nm to obtain a fluorescent spectrum as shown in Fig. 1. The emissions at 489 nm, 543 nm, 583 nm and 620 nm correspond to the emissions of ⁵D₄ → ⁷F₆, ⁵D₄ → ⁷F₅, ⁵D₄ → ⁷F₄ and ⁵D₄ → ⁷F₃ of the Tb ion, which was observed as green with the naked eye.

### (Examples 2 to 18)

Glasses were obtained stably by preparing raw materials in the proportions by weight shown in Tables 1 to 3, Samples 2 to 18 and melting the mixture in a similar manner to Example 1.

When the glasses obtained in Examples 2 to 18 were also excited by an ultraviolet ray of 250 nm, there were obtained spectra similar to Example 1, presenting green fluorescence.

### (Examples 19 to 20)

Glasses were obtained stably by preparing raw materials in the proportions by weight shown in Table 3, Samples Nos. 19 and 20 and melting the mixture in a similar manner to Example 1.

When the glass prepared in Example 19 was excited by an ultraviolet ray of 250 nm, there was obtained a fluorescent spectrum as shown in Fig. 2.

The emissions at 591 nm and 614 nm in Fig. 2 correspond to the emissions of ⁵D₀ → ⁷F₁ and ⁵D₀ → ⁷F₂ of the Eu ion, which was observed as red with the naked eye.

In Tables 4 to 6 are shown the compositions (atom %) of the glasses prepared in Examples 1 to 20.

**(g)**

| Raw Material | Sample No. | | | | | |
|---|---|---|---|---|---|---|
| | 1 | 2 | 3 | 4 | 5 | 6 |
| Al(PO₃)₃ | 19.5 | | 30 | 18.1 | 17.1 | 24.9 |
| Mg(PO₃)₂ | | | | 9.9 | | |
| Ca(PO₃)₂ | | | | | | |
| Sr(PO₃)₂ | | | | | | |
| Ba(PO₃)₂ | | 4.4 | | | 10 | |
| Zn(PO₃)₂ | | | | | | |
| LiPO₃ | | | | | | |
| NaPO₃ | | 4.4 | | | | |
| KPO₃ | | | | | | |
| AlF₃ | | 32.2 | | | | |
| MgF₂ | | 5.4 | | 7.8 | 8 | |
| CaF₂ | | 15 | | 14.7 | 15 | |
| SrF₂ | 19.9 | 20.5 | 5 | 12.7 | 13 | 20 |
| BaF₂ | 39.1 | 10 | 54.9 | 21.6 | 22 | 34.8 |
| Tb₂O₃ | 21.5 | 7.8 | 4.9 | 9 | 9.8 | 6.2 |
| Eu₂O₃ | | | | | | |
| Y₂O₃ | | | | | | |
| La₂O₃ | | | 2 | | 5.1 | |
| Gd₂O₃ | | | 3.2 | | | 14.2 |
| Yb₂O₃ | | | | 6.2 | | |
| CeO₂ | | | 0.05 | | | |
| LiF | | | | | | |
| NaF | | 0.3 | | | | |
| KF | | | | | | |

**(g)**

| Raw Material | Sample No. | | | | | | |
|---|---|---|---|---|---|---|---|
| | 7 | 8 | 9 | 10 | 11 | 12 | 13 |
| Al(PO₃)₃ | 19.2 | 25.5 | 18.7 | 20.2 | 17.1 | 19.7 | 19.7 |
| Mg(PO₃)₂ | | | | | | | |
| Ca(PO₃)₂ | | | 8 | | | | |
| Sr(PO₃)₂ | | | | | 8.1 | | |
| Ba(PO₃)₂ | | | | | | 5.6 | |
| Zn(PO₃)₂ | | | | 9.9 | | | |
| LiPO₃ | | | | | | | |
| NaPO₃ | | | | | | | |
| KPO₃ | 6.5 | | | | | | |
| AlF₃ | 15.3 | 16.3 | | | | 12.9 | |
| MgF₂ | 11.4 | 6 | 6.4 | | 6.4 | 4.4 | |
| CaF₂ | 8.8 | 26.4 | 12 | | 12 | 18.2 | |
| SrF₂ | 16.4 | 8.5 | 14.5 | 20 | 14.3 | 19.7 | 5 |
| BaF₂ | 14.2 | 10.2 | 25.7 | 39.9 | 25.5 | 9.4 | 68.1 |
| Tb₂O₃ | 8.3 | 7.1 | 13.5 | 9.8 | 16.6 | 7.4 | 4.4 |
| Eu₂O₃ | | | | | | | |
| Y₂O₃ | | | 0.9 | | | | |
| La₂O₃ | | | | | | | |
| Gd₂O₃ | | | | | | | 2.8 |
| Yb₂O₃ | | | | | | | |
| CeO₂ | | | 0.3 | 0.2 | | | |
| LiF | | | | | | 1.8 | |
| NaF | | | | | | | |
| KF | | | | | | 1 | |

**(g)**

| Raw Material | Sample No. | | | | | | |
|---|---|---|---|---|---|---|---|
| | 14 | 15 | 16 | 17 | 18 | 19 | 20 |
| Al(PO₃)₃ | | 25 | 14.9 | 25 | 30.3 | 25.8 | 18.7 |
| Mg(PO₃)₂ | | | | | | | |
| Ca(PO₃)₂ | 1.4 | | | | | | |
| Sr(PO₃)₂ | | | | | | | |
| Ba(PO₃)₂ | 4.6 | | | | | | |
| Zn(PO₃)₂ | | | | | | | |
| LiPO₃ | | | 3.8 | | | | |
| NaPO₃ | | | 6.2 | | | | |
| KPO₃ | 3.5 | | | | | | |
| AlF₃ | 34.7 | | 14.5 | | | | 22.4 |
| MgF₂ | 3.3 | | 2.7 | | | | 5.5 |
| CaF₂ | 11.9 | | 6.8 | | | | 9.7 |
| SrF₂ | 21.5 | 27.1 | 26.7 | 40 | 12.9 | 15.3 | 15.6 |
| BaF₂ | 11 | 32.9 | 18.3 | 25 | 39.8 | 43.9 | 21.8 |
| Tb₂O₃ | 6.6 | 5 | 6.2 | 10 | 14.8 | | |
| Eu₂O₃ | | | | | | 15 | 6.2 |
| Y₂O₃ | | 10 | | | | | |
| La₂O₃ | | | | | | | |
| Gd₂O₃ | | | | | 2.2 | | |
| Yb₂O₃ | | | | | | | |
| CeO₂ | | | | | | | |
| LiF | | | | | | | |
| NaF | 1.3 | | | | | | |
| KF | | | | | | | |

**(mol%)**

| Glass Composition (atom) | Sample No. | | | | | |
|---|---|---|---|---|---|---|
| | 1 | 2 | 3 | 4 | 5 | 6 |
| P | 9.2 | 2.1 | 12.7 | 9.8 | 8.7 | 11 |
| Al | 3.1 | 11 | 4.2 | 2.2 | 2.2 | 3.6 |
| Mg | | 2.5 | | 5.6 | 4.3 | |
| Ca | | 5.5 | | 5.9 | 6.4 | |
| Sr | 6.6 | 4.7 | 1.5 | 3.2 | 3.4 | 6.2 |
| Ba | 9.3 | 2.1 | 11.7 | 3.9 | 5.3 | 7.7 |
| Zn | | | | | | |
| Li | | | | | | |
| Na | | 1.4 | | | | |
| K | | | | | | |
| Y | | | | | | |
| La | | | 0.5 | | 1.1 | |
| Gd | | | 0.7 | | | 3 |
| Yb | | | | 1 | | |
| Tb | 4.9 | 1.2 | 1 | 1.5 | 1.8 | 1.3 |
| Eu | | | | | | |
| Ce | | | 0.01 | | | |
| O | 35 | 8.1 | 41.4 | 33.3 | 30.3 | 39.4 |
| F | 31.8 | 61.5 | 26.4 | 33.7 | 36.6 | 27.7 |

**(mol%)**

| Glass Composition (atom) | Sample No. | | | | | | |
|---|---|---|---|---|---|---|---|
| | 7 | 8 | 9 | 10 | 11 | 12 | 13 |
| P | 7.6 | 7.6 | 9.6 | 11.8 | 8.9 | 7.3 | 9.5 |
| Al | 7.1 | 7.6 | 2.3 | 2.8 | 2.2 | 6.4 | 3.2 |
| Mg | 5.1 | 2.5 | 3.4 | | 3.5 | 2 | |
| Ca | 3.1 | 8.9 | 6.4 | | 5.3 | 6.5 | |
| Sr | 3.6 | 1.8 | 3.8 | 5.9 | 5 | 4.4 | 1.7 |
| Ba | 2.3 | 1.5 | 4.8 | 8.5 | 5 | 2 | 16.5 |
| Zn | | | | 1.7 | | | |
| Li | | | | | | 1.9 | |
| Na | | | | | | | |
| K | 1.5 | | | | | 0.5 | |
| Y | | | 0.3 | | | | |
| La | | | | | | | |
| Gd | | | | | | | 0.7 |
| Yb | | | | | | | |
| Tb | 1.3 | 1 | 2.4 | 2 | 3.1 | 1.1 | 1 |
| Eu | | | | | | | |
| Ce | | | 0.05 | 0.05 | | | |
| O | 24.8 | 24.4 | 33 | 38.5 | 31.5 | 23.7 | 31.1 |
| F | 43.5 | 44.7 | 34 | 28.8 | 35.4 | 44.1 | 36.3 |

**(mol%)**

| Glass Composition (atom) | Sample No. | | | | | | |
|---|---|---|---|---|---|---|---|
| | 14 | 15 | 16 | 17 | 18 | 19 | 20 |
| P | 2.4 | 10.4 | 8.1 | 10.3 | 12.9 | 11.3 | 6.2 |
| Al | 10.7 | 3.5 | 6.8 | 3.4 | 4.2 | 3.8 | 9.7 |
| Mg | 1.7 | | 1.3 | | | | 2.6 |
| Ca | 5 | | 2.6 | | | | 3.6 |
| Sr | 5.4 | 7.9 | 6.3 | 11.6 | 3.8 | 4.7 | 3.6 |
| Ba | 2.4 | 6.9 | 3.1 | 5.2 | 8.4 | 9.6 | 3.6 |
| Zn | | | | | | | |
| Li | | | 1.3 | | | | |
| Na | 1 | | 1.8 | | | | |
| K | 1 | | | | | | |
| Y | | 3.2 | | | | | |
| La | | | | | | | |
| Gd | | | | | 0.4 | | |
| Yb | | | | | | | |
| Tb | 1.1 | 1 | 1 | 2 | 3 | | |
| Eu | | | | | | 3.3 | 1 |
| Ce | | | | | | | |
| O | 8.9 | 37.6 | 25.9 | 34 | 42.9 | 38.7 | 20 |
| F | 60.5 | 29.5 | 41.9 | 33.5 | 24.4 | 28.6 | 49.7 |

### Comparative Example 1

Raw materials were mixed in a proportion by weight, calculated from a glass composition of the prior art, i.e. 75 % of B₂O₃, 17 % of Na₂O, 2 % of Al₂O₃ 3.45 % of CaO, 1 % of La₂O₃, 0.05 % of Eu₂O₃ and 1.5 % of Tb₂O₃ (mol %) (32.9 % of B, 7.5 % of Na, 0.9 % of Al, 0.8 % of Ca, 0.4 % of La, 0.01 % of Eu, 0.7 % of Tb and 56.9 % of 0 by mol % representation of atoms making up the glass), melted at 1000 to 1200 °C, allowed to flow out into a metallic mold and shaped.

When the thus prepared glass was excited by an ultraviolet ray of 250 nm, there was obtained a spectrum similar to Example 1, presenting green fluorescence. However, the emission intensity was only 1/4 times as large as that of Example 1 even taking the highest peak at 543 nm.

### Advantages of the Invention

The fluorescent glass of the present invention is capable of converting invisible ultraviolet rays into visually observable visible rays with high efficiency and is available for controlling the optical axis of a laser beam such as an excimer laser.

## Claims

1. A Tb- or Eu-containing fluorophosphate fluorescent glass capable of exhibiting fluorescence in the visible region wherein the glass has the following chemical composition (mol %):
P 2 to 13 %
Al 2 to 12 %
Mg O to 6 %
Ca 0 to 9 %
Sr 1.5 to 12 %
Ba 1.5 to 17 %
Zn 0 to 2 %
Ln 0.8 to 5 %
Ln¹ 0 to 4 %
R 0 to 3 %
Ce 0 to 0.2 %
0 4 to 55 % and
F 15 to 70 %
and Ln is Tb or Eu, and Ln¹ is at least one atom selected from the group consisting of Y, La, Gd and Yb and R is at least one atom selected from the group consisting of Li, Na and K.

2. Use of a Tb- or Eu- containing fluorophosphate fluorescent glass as claimed in claim 1 for controlling the optical axis of a laser beam.

3. Apparatus for producing a laser beam whenever comprising a Tb- or Eu- containing fluorophosphate fluorescent glass as claimed in claim 1.

## Patentansprüche

1. Tb oder Eu enthaltendes fluoreszierendes Fluorphosphatglas, das im sichtbaren Bereich fluoreszieren kann und folgende chemische Zusammensetzung aufweist (Mol-%):
P 2 bis 13 %
Al 2 bis 12 %
Mg 0 bis 6 %
Ca 0 bis 9 %
Sr 1,5 bis 12 %
Ba 1,5 bis 17 %
Zn 0 bis 2 %
Ln 0,8 bis 5 %
Ln¹ 0 bis 4 %
R 0 bis 3 %
Ce 0 bis 0,2 %
O 4 bis 55 % und
F 15 bis 70 %
wobei Ln Tb oder Eu bedeutet, Ln¹ mindestens ein Atom aus der Gruppe Y, La, Gd und Yb ist und R mindestens ein aus Li, Na und K ausgewähltes Atom ist.

2. Verwendung eines Tb oder Ein enthaltenden fluoreszierenden Fluorphosphatglases nach Anspruch 1 zur Steuerung der optischen Achse eines Laserstrahls.

3. Apparat zur Erzeugung eines Laserstrahls wann immer er Tb oder Eu enthaltendes fluoreszierendes Fluorphosphatglas nach Anspruch 1 enthält.

## Revendications

1. Verre fluorescent au fluorophosphate contenant du Tb ou Eu, pouvant présenter une fluorescence dans la région de la lumière visible, verre qui a la composition chimique suivante (moles %) :
P 2 à 13 %
Al 2 à 12 %
Mg 0 à 6 %
Ca 0 à 9 %
Sr 1,5 à 12 %
Ba 1,5 à 17 %
Zn 0 à 2 %
Ln 0,8 à 5 %
Ln¹ 0 à 4 %
R 0 à 3 %
Ce 0 à 0,2 %
O 4 à 55 %, et
F 15 à 70 %
Ln représentant Tb ou Eu, et Ln¹ représentant au moins un atome d'élément choisi dans le groupe consistant en Y, La, Gd et Yb, et R représentant au moins un atome d'élément choisi dans le groupe consistant en Li, Na et K.

2. Utilisation d'un verre fluorescent au fluorophosphate contenant du Tb ou Eu suivant la revendication 1, pour ajuster l'axe optique d'un faisceau laser.

3. Appareil pour la production d'un faisceau laser, comprenant un verre fluorescent au fluorophosphate contenant du Tb ou Eu suivant la revendication 1.
